# FASCICULE DE BREVET EUROPEEN

(11) **EP 3 875 181 B1**
(45) Date de publication et mention de la délivrance du brevet: **06.07.2022**
(21) Numéro de dépôt: 21152640.5
(22) Date de dépôt: 20.01.2021
(51) Int. Cl.: B09B 3/00, A01G 24/00, A62D 3/02, B03B 9/04, B09B 5/00, B09C 1/10, B22C 5/10, B22C 5/18, C05D 9/00

(54) **PROCÉDÉ DE PHYTOREMÉDIATION DE SABLES POLLUÉS**
VERFAHREN ZUR PHYTOREMEDIATION VON VERUNREINIGTEN SANDBÖDEN
PHYTOREMEDIATION METHOD FOR POLLUTED SAND

(30) Priorité: 06.02.2020 FR 2001155
(43) Date de publication de la demande: 08.09.2021
(73) Titulaire: Inerta, 44840 Les Sorinières (FR)
(72) Inventeur: GARAUD, Géric, 44340 Bouguenais (FR); TRIBOIT, Frédéric, 44300 Nantes (FR)
(74) Mandataire: Lequien, Philippe

(56) Documents cités:
- EP-A1- 1 718 426
- WO-A1-2015/046416
- WO-A1-2017/174873
- CN-A- 109 511 515
- FR-A1- 2 844 732

## Description

Le domaine de l'invention est celui des techniques de dépollution. Plus précisément, l'invention concerne la dépollution de sables tels que des sables de fonderies.

Dans l'industrie de la fonderie, des pièces sont obtenues par coulage d'un métal ou d'un alliage liquide à l'intérieur d'un moule à l'image de ces pièces.

Les moules de fonderie peuvent être conçus de différentes manières.

Une conception classique de moule passe par l'utilisation de sables.

Ces sables constituent un matériau réfractaire se présentant sous une forme granulaire.

Les sables sont amenés au contact d'un modèle d'une pièce à produire, puis compactés autour de cette pièce.

Pour conserver l'empreinte du modèle lors de l'extraction de ce dernier, des manipulations du moule formé, puis du coulage et du refroidissement du métal ou de l'alliage liquide, les sables de fonderie comportent des additifs.

On retrouve comme additifs des liants organique ou minéraux, qui sont destinés à agglomérer les grains de sable entre eux.

Les additifs peuvent également consister en des adjuvants aptes à améliorer l'état de surface du moule ou la capacité du moule à supporter le démoulage du modèle utilisé.

Les sables de fonderie peuvent être retraités après l'obtention d'une pièce. Toutefois, ils présentent des taux de pollution particulièrement importants.

Les sables de fonderie forment ainsi un déchet de l'industrie de la fonderie qu'il convient de recycler ou de transporter en décharge.

Les sables de fonderie sont notamment contaminés par des polluants à la fois organiques et d'origine xénobiotique, en benzène, toluène, éthylbenzène, xylène et/ou en composés phénoliques, et d'origine minérale, en fluorures et/ou sulfates.

Il est connu le document de brevet publié sous le numéro WO 2017/174873 A1 qui aborde le traitement de sables de fonderie, le document de brevet publié sous le numéro FR 2 844 732 A1 qui traite de l'ensemencement par des micro-organismes de sables de fonderie, le document de brevet publié sous le numéro WO 2015/046416 A1 qui traite de la dépollution d'un substrat, et le document de brevet publié sous le numéro CN 109511515 A.

Dans le domaine de la dépollution de matière solide contaminée, on connaît aussi les procédés biotechnologiques de phytoremédiation d'anciens sites industriels pollués. De tels procédé consistent à cultiver sur un site pollué des plantes de phytoremédiation qui sont capables de fixer au moins une partie des polluants, voire de dégrader au moins l'une de ces parties sans les fixer.

Plus spécifiquement, dans le domaine de l'invention on connaît notamment le document de brevet publié sous le numéro EP1718426 qui décrit un procédé de dépollution biotechnologique de sables de fonderies.

Ce procédé consiste à traiter des sables de fonderie par action de micro-organismes. L'objectif premier de ce procédé est d'assurer le retraitement des phénols polluants les sables usés, résultant de l'usage de résines phénoliques comme liant organique polymérisé.

Il résulte de cet enseignement que le besoin relatif au retraitement polluants des sables de fonderies est connu, mais la réponse à ce besoin n'est que partielle. Une attente existe par conséquent en termes de traitement plus global des polluants de sables de fonderie.

De plus, la prise de conscience des enjeux écologiques et le développement de l'ingénierie écologique tendent à faire changer les pratiques anciennes de retraitement (stockage des sables usés, ou de sables partiellement traités mais toujours pollués).

Un besoin relatif à une transition écologique en particulier dans le retraitement de déchets de fonderies apparaît également.

L'invention a notamment pour objectif de pallier ces besoins nouveaux.

Plus précisément, l'invention a pour objectif de proposer un procédé de retraitement de sables pollués, tels que des sables de fonderies, qui permettent de retraiter une plus grande partie de polluants que ce que permettent les procédés selon l'art antérieur.

L'invention a encore pour objectif de fournir un tel procédé qui s'inscrit dans une transition écologique du retraitement des déchets de fonderie.

Ces objectifs, ainsi que d'autres qui apparaîtront par la suite, sont atteints par l'invention qui a pour objet un procédé de dépollution de sables contaminés, notamment de sables de fonderie, comprenant des polluants minéraux et organiques, caractérisé en ce qu'il comprend :
- une étape de préparation d'un substrat par adjonction aux sables contaminés d'un matériau carboné poreux choisi pour fixer des polluants minéraux, notamment des fluorures ;
- une étape de phytoremédiation consistant à faire pousser sur le substrat des plantes sélectionnées pour dégrader au moins une partie des polluants organiques, l'étape de phytoremédiation produisant des sables intermédiaires à partir du substrat ;
- une étape de séparation du matériau carboné poreux des sables intermédiaires, l'étape de séparation produisant des sables traités.

Le procédé selon l'invention permet de dépolluer au moins une partie des polluants organiques, ainsi qu'au moins une partie des polluants minéraux de sables pollués.

Par matériau carboné poreux, on entend un matériau constitué essentiellement de matière carbonée à structure poreuse. Ce matériau présente une capacité importante à capter et à retenir des molécules amenées à son contact.

La combinaison du matériau carboné poreux avec les plantes de phytoremédiation produit une synergie.

En effet, en captant la fraction minérale des polluants, les matériaux carbonés poreux favorisent la croissance des plantes de phytoremédiation qui vont pouvoir alors dégrader la fraction organique des polluants. En l'absence du matériau carboné poreux, les polluants minéraux limiteraient le développement des plantes de phytoremédiation et ainsi la dégradation des polluants organiques.

En d'autres termes, en plus de dépolluer au moins une partie des polluants minéraux, le matériau carboné poreux garanti le bon développement des plantes de phytoremédiation et la bonne dégradation d'au moins une partie des polluants organiques.

De manière plus concrète, les fluorures, qui sont des polluants minéraux des sables de fonderies, sont écotoxiques et ne sont pas naturellement absorbés ou dégradés par les plantes de phytoremédiation. Pire, ces fluorures peuvent diminuer la fertilité des plantes de phytoremédiation. En conséquence, l'adsorption par le matériau carboné poreux des fluorures évite une diminution de la fertilité de ces plantes et leur permet de se développer de manière optimale.

De plus, grâce à l'étape de séparation, le matériau carboné poreux peut être lui-même retraité par exemple pour extraire les minéraux adsorbés ou pour valoriser ce matériau carboné poreux enrichi de minéraux.

Avantageusement, le matériau carboné poreux et les sables intermédiaires présentent une différence de granulométrie, l'étape de séparation utilisant cette différence de granulométrie pour permettre la séparation du matériau carboné poreux des sables intermédiaires.

Une telle différence de granulométrie permet de réaliser une séparation simple et peu onéreuse du matériau carboné poreux des sables intermédiaires.

Bien entendu, en amont de l'étape de préparation du substrat, les sables contaminés et le matériau carboné poreux peuvent être adaptés pour pouvoir présenter cette différence de granulométrie et permettre la réalisation d'une telle séparation.

Selon une caractéristique avantageuse du procédé de dépollution, le matériau carboné poreux est du charbon actif.

Le charbon actif présente une structure amorphe composée principalement d'atomes de carbone. Il présente une grande surface spécifique lui conférant un fort pouvoir adsorbant.

Un tel matériau carboné poreux permet également de structurer le substrat. Ceci permet, in fine, de faciliter l'implantation végétale lors de l'étape de phytoremédiation (création d'interstices dans le substrat permettant un bon développement racinaire des plantes).

Selon une autre caractéristique préférée, le procédé de dépollution comprend, avant l'étape de phytoremédiation, une étape d'ensemencement bactérien par voie humide, puis une étape d'ensilage anaérobie des sables contaminés.

Ces étapes d'ensemencement puis d'ensilage permettent de réaliser une maturation anaérobie. Les sables contaminés sont fermentés à l'abri de l'air.

L'ensemencement bactérien correspond à un arrosage des sables contaminés à l'aide d'une eau enrichie par un extrait de micro-organismes efficaces.

Par micro-organismes efficaces, il est entendu des micro-organismes aérobies et anaérobies comprenant notamment des bactéries lactiques (*Lactobacillus casei*), des bactéries photosynthétiques (*Rhodopseudomonas palustris*), des levures (*Saccharomyces cerevisiae),* et d'autres micro-organismes dits « bénéfiques » qui existent naturellement dans l'environnement et qui peuvent se développer dans l'eau enrichie.

Suite à l'obtention d'un niveau d'humidité prédéterminé, l'étape d'ensilage anaérobie peut débuter.

Les sables contaminés ensemencés sont compactés puis recouvert d'un matériau étanche à l'air et à l'eau. Dans cet état, les sables contaminés ensemencés fermentent durant un laps de temps prédéterminé.

Cette étape d'ensemencement puis d'ensilage permet d'ajuster le pH des sables contaminés et de réaliser un prétraitement des polluants organiques (hydrocarbures aromatiques polycycliques, ci-après désigné par l'abréviation HAPs, hydrocarbures linéaires type C10-C40, composés organiques volatils type benzène, toluène, et xénobiotique notamment) pour les rendre plus facilement assimilable par les plantes lors de l'étape de phytoremédiation.

Selon une autre caractéristique avantageuse du procédé de dépollution, il comprend, après l'étape de séparation, une étape de compostage aérobie des sables traités.

Cette étape de compostage, d'une durée pouvant être variable, assure une dégradation plus complète des hydrocarbures à longues chaînes, comme les HAPs ou les hydrocarbures C10-C40.

Le compostage des sables traités permet également de réaliser une dégradation naturelle de la matière organique résiduelle contenue dans le sable traité, ainsi que la réalisation d'une hygiénisation (réduction à des taux acceptables des concentrations en agents pathogènes bactérien, viral ou parasitaire) par l'élévation de la température dans le sable traité qui fait l'objet du compostage.

Avantageusement, lors de l'étape de compostage, les sables traités sont exposés à l'air sous forme au moins d'un monticule, un taux d'oxygène étant contrôlé à l'intérieur du ou des monticules, le ou les monticules étant retournés en cas de chute du taux d'oxygène.

Un tel suivi de l'étape de compostage permet de s'assurer que les sables traités, dans le ou les monticules, restent dans des conditions aérobies. En d'autres termes, il est évité des situations d'anaérobie.

Avantageusement, l'étape de phytoremédiation est réalisée sur un sol imperméabilisé, des eaux d'irrigation du substrat étant collectées dans un bassin de collecte puis réutilisées pour irriguer le substrat.

Il est ainsi évité une pollution du site sur lequel l'étape de phytoremédiation est réalisée.

De plus, les polluants contenus dans les eaux d'irrigations ruisselantes et collectées sont alors réinjectés dans le substrat pour y être dégradés ou adsorbés.

Selon un aspect avantageux de l'invention, les plantes, sélectionnées pour dégrader au moins une partie des polluants organiques, sont choisies parmi les espèces végétales endogènes à un lieu où est réalisée l'étape de phytoremédiation.

De telles espèces végétales endogènes sont particulièrement adaptées au climat du lieu sur lequel l'étape de phytoremédiation est réalisée. En d'autres termes, il est évité que les espèces végétales ne souffrent des conditions climatiques normales du lieu de réalisation du procédé de dépollution.

En plus, il est évité une contamination du lieu de réalisation du procédé de dépollution par des espèces végétales qui ne seraient pas endogènes.

Selon une caractéristique préférée, les plantes, sélectionnées pour dégrader au moins une partie des polluants organiques, sont choisies parmi des espèces végétales aptes à dégrader les phénols, les benzènes, les toluènes, les éthylbenzènes et les xylènes.

Les plantes présentent alors une capacité avantageuse à dégrader les principaux polluants organiques que l'on peut retrouver dans des sables de fonderie pollués.

Enfin, selon un aspect préféré du procédé de dépollution, les plantes, sélectionnées pour dégrader au moins une partie des polluants organiques, appartiennent à la famille des Poacées. L'espèce sélectionnée est vivace, commune à l'hémisphère Nord, capable de produire une biomasse importante grâce à un cycle de croissance rapide et adaptée aux milieux de culture exigeants.

D'autres caractéristiques et avantages de l'invention apparaîtront plus clairement à la lecture de la description suivante d'un mode de réalisation préférentiel de l'invention, donné à titre d'exemple illustratif et non limitatif, et de :

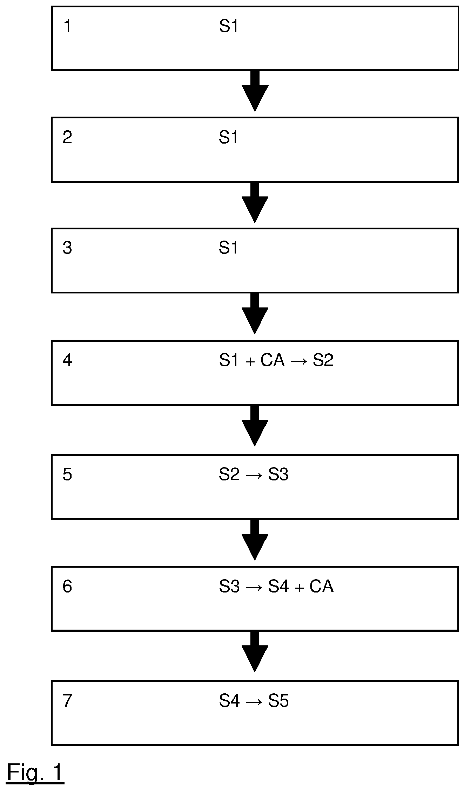

- la figure 1 qui est un diagramme illustrant schématiquement le procédé de dépollution de sables contaminés selon l'invention.

En référence à la figure 1, le procédé de dépollution est conçu pour permettre de dépolluer des sables présentant une contamination duale. Une telle contamination duale est, notamment d'origine organique et xénobiotique (benzènes, toluènes, éthylbenzènes et xylènes, ci-après désignés par l'abréviation BTEX, et/ou composés phénoliques) d'une part, et d'origine minérale (fluorures et/ou sulfates) d'autre part.

Par exemple, le procédé de dépollution selon l'invention est particulièrement adapté pour dépolluer des sables usés de fonderies.

Tel que cela est développé par la suite, le procédé de dépollution est conçu pour être réalisé sur une plateforme dédiée et adaptée au procédé. Plus précisément, la plateforme sur laquelle est mise en oeuvre le procédé de dépollution est conçue pour éviter une fuite des polluants issus des sables contaminés.

Le procédé de dépollution mis en œuvre est un procédé de dépollution biotechnologique utilisant une technologie de phytoremédiation. Ce procédé comprend notamment :
- une phase de préparation ;
- une phase de phytoremédiation proprement dite, et
- une phase de post-traitement.

Plus précisément et tel qu'illustré par la figure 1, le procédé de dépollution comprend successivement :
- une étape de tamisage 1 et de tri granulométrique des sable contaminés S1 ;
- une étape d'ensemencement 2 bactérien des sable contaminés S1 ;
- une étape d'ensilage 3 anaérobie des sable contaminés S1 ;
- une étape de préparation 4 d'un substrat S2 avec les sables contaminés S1 et un matériau carboné poreux CA ;
- une étape de phytoremédiation 5 du substrat S2 pour obtenir des sables nommés « sables intermédiaires » S3 ;
- une étape de séparation 6 du matériau carboné poreux CA des sables intermédiaires S3 pour obtenir des sables traités S4 ;
- une étape de compostage 7 aérobie des sables traités S4.

La phase de préparation comprend notamment l'étape de tamisage 1, l'étape de d'ensemencement 2, l'étape d'ensilage 3, et l'étape de préparation 4.

La phase de phytoremédiation consiste en l'étape de phytoremédiation 5.

Enfin, la phase de post-traitement comprend notamment l'étape de séparation 6 et l'étape de compostage 7.

Dans la phase de préparation, les sables contaminés S1 sont pris en charge et préparés en vue de faciliter la phase de phytoremédiation.

Cette prise en charge est réalisée de manière distincte pour chaque lot de sables contaminés S1, en fonction de leur ordre d'arrivée.

Ces lots sont entreposés distinctement les uns des autres par le biais d'une compartimentation d'une plateforme sur laquelle est réalisé le procédé de dépollution.

Au préalable de l'étape de tamisage 1, des analyses sur des échantillons significatifs peuvent être réalisées pour obtenir des données d'analyse physiques, chimiques, agronomiques et toxicologiques. Ces données permettent de réaliser un suivi des concentrations des polluants au fur et à mesure du procédé.

L'étape de tamisage 1 et de tri granulométrique a pour objectif d'obtenir un sable meuble, dénué de macro déchets, et apte à permettre une bonne culture de plantes lors de l'étape de phytoremédiation 5.

L'étape de tamisage 1 et de tri granulométrique permet en effet d'obtenir des sables contaminés S1 qui présentent une granulométrie dans une gamme prédéterminée.

Si les sables contaminés S1 présentent des particules solides avec une granulométrie trop importante, par exemple des reliquats de moules des fonderies, alors un concassage de ces particules est effectué.

Suite à cette étape de tamisage 1 et de tri, l'étape d'ensemencement 2 bactérien est réalisée.

L'étape d'ensemencement 2 bactérien correspond plus particulièrement à un ensemencement bactérien par voie humide des sables contaminés S1.

Les sables contaminés S1 sont arrosés à l'aide d'une solution d'eau enrichie par un extrait de micro-organismes efficaces.

Cet arrosage est réalisé sur une aire de préparation totalement imperméabilisée. A titre d'exemple, l'imperméabilisation est formée par un revêtement béton étanche à l'eau.

Les eaux collectées sur cette aire de préparation et résultant de l'arrosage, nommées « eaux de lessivage », sont par la suite concentrées dans un bassin étanche qui est localisé au point le plus bas de cette aire de préparation. La collecte des eaux de lessivage dans le bassin étanche est notamment réalisée par gravité.

Les eaux de lessivage récoltées peuvent être reprises pour irriguer de nouveau les sables contaminés S1 jusqu'à atteindre un seuil d'humidité prédéterminé.

Au-delà du seuil d'humidité, les eaux de lessivage récoltées peuvent être utilisées lors de l'étape de phytoremédiation 5 réalisée ultérieurement.

Une fois l'étape d'ensemencement 2 bactérien menée à terme, l'étape d'ensilage 3 anaérobie peut être conduite.

Cette étape d'ensilage 3 anaérobie a pour objectif la réalisation d'une fermentation.

Les sables contaminés S1 ensemencés sont positionnés sous forme de monticule compact pouvant atteindre de 3 à 5 mètres de hauteur pour un diamètre de 20 mètres à 30 mètres d'emprise au sol.

Ces monticules sont compactés de manière à ce que la présence d'air et donc d'oxygène à l'intérieur des sables contaminés S1 soit inférieure à un pourcentage donné. De préférence, le pourcentage donné est inférieur à10 %.

Chaque monticule est alors recouvert d'une membrane étanche à l'air et à l'eau. Des matériaux inertes de maintien sont positionnés au-dessus de la membrane pour garantir le maintien dans des conditions anaérobies pendant un temps prédéterminé. A titre d'exemple, le temps prédéterminé est de cinq semaines.

Un réseau de drainage peut être déposé à la base de chaque monticule de manière à ce que des eaux de pressage, puis par la suite de percolation (désignée par la suite thé de sable) soient collectées dans un bassin.

Ce thé de sable peut être réutilisé comme fertilisant pour des plantes de l'étape 5 de phytoremédiation.

A l'issue de cette étape d'ensilage 3 anaérobie, des sables contaminés S1 enrichis d'une microfaune active sont obtenus.

Après l'étape d'ensemencement 2 bactérien, et l'étape d'ensilage 3 anaérobie des sable contaminés S1, il est procédé à l'étape de préparation 4 du substrat

Cette étape de préparation 4 vise à adjoindre aux sables contaminés S1 un matériau carboné poreux CA pour obtenir un substrat S2.

Le matériau carboné poreux CA est choisi pour fixer des polluants minéraux. Ce matériau carboné poreux CA est plus spécifiquement choisi pour fixer des polluants du type fluorures et sulfates.

Selon un mode de réalisation préféré du procédé de dépollution, le matériau carboné poreux CA est choisi de manière à ce qu'il présente une différence de granulométrie avec les sables contaminés S1. Cette différence de granulométrie est notamment utilisée lors de l'étape de séparation 6 décrite plus en détails par la suite.

Le matériau carboné poreux CA est plus spécifiquement du charbon actif.

En effet, un tel matériau carboné poreux CA, en l'espèce le charbon actif, permet de structurer le substrat et a une origine biologique.

Il peut également présenter une composition parfaitement connue par le biais d'analyses.

Avantageusement, le charbon actif est adjoint aux sables contaminés de manière à ce que le substrat comprenne de 5 à 15 % en volume de matériau carboné poreux.

A l'issue de cette étape de préparation 4, un substrat S2 comprenant les sables contaminés prétraités avec le matériau carboné poreux et enrichi d'une microfaune active est obtenu.

Il peut alors être procédé à la phase de phytoremédiation et, en d'autres termes, à l'étape de phytoremédiation 5.

Cette étape de phytoremédiation 5 a pour but de produire des sables dits « sables intermédiaires » S3 à partir du substrat S2.

Lors de cette étape de phytoremédiation 5, des plantes sélectionnées pour dégrader au moins une partie des polluants organiques sont cultivées sur le substrat S2.

Plus précisément, l'étape de phytoremédiation 5 est réalisée avec des plantes qui sont choisies parmi des espèces végétales endogènes à un lieu où est réalisée cette étape de phytoremédiation 5. Ces plantes sont choisies parmi des espèces végétales aptes à dégrader les phénols et les BTEX.

Les plantes sélectionnées sont plus spécifiquement apparentées à la famille des Poacées (graminées).

Cette étape de phytoremédiation 5 permet d'assurer à la fois la dégradation de l'essentiel des polluants organiques, et en particulier des phénols et des BTEX, par le biais de l'activité microbienne liée au système racinaire des plantes.

De plus, lors de cette étape de phytoremédiation 5, les polluants minéraux et notamment les polluants fluorés, sont adsorbés par le matériau carboné poreux CA.

Grâce à cette adsorption par le matériau carboné poreux CA, et ainsi la réduction des quantités de fluor, les plantes présentent une meilleure fertilité, ce qui augmente l'efficacité de la dégradation organique lors de cette étape de phytoremédiation 5.

L'étape de phytoremédiation 5 est plus spécifiquement réalisée de la manière décrite ci-après.

Cette étape de phytoremédiation 5 est réalisée sur une nouvelle aire de la plateforme pourvue d'un sol imperméabilisé, ainsi que d'un bassin de collecte.

Ce sol imperméabilisé évite la fuite des polluants, et permet que des eaux d'irrigation du substrat puissent être collectées dans le bassin de collecte puis réutilisées pour irriguer de nouveau le substrat S2.

L'imperméabilisation du sol est réalisée par un apport d'argile, par exemple de la bentonite, ou d'un matériau équivalent, sur une épaisseur prédéterminée. Un compactage de cette argile est réalisé pour garantir l'imperméabilité de ce sol.

Une pente générale est créée pour pouvoir guider l'écoulement des eaux d'irrigation en direction du bassin de collecte.

L'aire peut intégrer un réseau de canalisations de drainage perforées qui permettent de faciliter la collecte et l'acheminement des eaux (météoriques, de ruissellement et de percolation) vers le bassin de collecte. Le bassin de collecte est préférentiellement pourvu d'une pompe immergée pour pouvoir remonter ces eaux.

Sur cette aire imperméabilisée, le substrat S2 à traiter est disposé sur une hauteur d'environ 50 centimètres, directement sur le sol imperméabilité.

Des lits (ou bandes) de substrat S2 sont ménagés, en rehausse, perpendiculairement à la pente générale de l'aire, ce qui permet d'augmenter le temps de concentration des percolats vers le point le plus bas de l'aire. Ceci permet d'améliorer l'efficacité du système d'irrigation.

Les bandes de substrat S2, déjà enrichi en micro-organismes, sont alors directement ensemencées, à la volée, par l'espèce végétale précédemment évoquée. Alternativement, l'espèce végétale peut être plantée.

Par la suite, lors de cette étape de phytoremédiation 5, une irrigation gravitaire continue est réalisée. Elle a pour objectif de garantir une haute saturation en eau des lits de culture, ou plus précisément, une quasi saturation. Cette irrigation gravitaire continue est réalisée depuis un point le plus haut de cette plateforme jusqu'à son point le plus bas (le bassin de collecte) au moyen de la pompe.

Les plantes peuvent être fertilisées de manière optionnelle.

En effet, en phase de forte croissance des plantes, par exemple de mai à juillet, une fertilisation peut être réalisée à l'aide d'un digestat liquide qui est préalablement fortement dilué et oxygéné.

Grâce à l'utilisation d'une espèce végétale endogène au lieu de réalisation du procédé de dépollution, il n'est pas nécessaire de réaliser de traitement phytosanitaire grâce à la résilience naturelle d'une telle espèce végétale vis-à-vis des conditions naturelles de ce lieu.

A la fin de l'étape de phytoremédiation 5, les plantes peuvent être récoltées par fauchage des pieds sur tige pour obtenir une biomasse. Cette biomasse peut alors être exportée vers une unité de valorisation (compostage) ou énergétique (méthanisation) après des analyses élémentaires permettant de garantir son innocuité.

Les systèmes racinaires des plantes sont quant à eux laissés dans les sables intermédiaires S3.

Il est procédé ensuite à l'étape de séparation 6 du matériau carboné poreux CA des sables intermédiaires S3.

Cette étape de séparation 6 a pour but de produire des sables dits « sables traités » S4.

Tel qu'évoqué précédemment, l'étape de séparation 6 est réalisée à l'aide de la différence de granulométrie entre le matériau carboné poreux CA et les sables contaminés S1, et ainsi entre le matériau carboné poreux CA et les sables intermédiaires S4.

Cette étape de séparation 6 est notamment réalisée par tamisage.

Il est ainsi obtenu les sables traités S4 d'un côté et le matériau carboné poreux ainsi que les débris végétaux d'un autre côté.

Vis-à-vis des sables traités S4, il est alors procédé à l'étape de compostage 7 aérobie.

Les sables sont, lors de cette étape de compostage 7 aérobie, exposés à l'air sous la forme de monticules pour autoriser un processus de compostage naturel de la matière organique résiduelle ainsi que son hygiénisation par le biais d'une élévation de température.

L'humidité des sables traités S4 est suivie et ajustée au besoin à l'aide du thé de sable produit lors de l'étape d'ensilage 3 anaérobie. De plus, les monticules sont retournés en cas de chute du taux d'oxygène pour conserver des conditions aérobies dans les monticules.

Un tel compostage naturel permet d'obtenir des sables dits « sables dépollués » S5.

Dans le cas où ces sables dépollués S5 doivent rejoindre des filières de valorisation telles que des filières de production de béton, un lavage complémentaire peut être réalisé.

Dans un autre cas, ou par exemple la pureté des sables dépollués S5 n'est pas nécessaire, alors les sables dépollués S5 sont directement acheminés vers des filières adaptées, par exemple pour réaliser une reconstruction de sol.

Vis-à-vis des matériaux carbonés poreux CA obtenus lors de l'étape de séparation 6, ils peuvent être réutilisés tels quels ou nécessiter un retraitement.

Plus précisément, le matériau carboné poreux CA peut être directement retourné et réutilisé dans l'étape de préparation 4 d'un substrat S2 s'il présente des taux de polluants suffisamment faibles pour leur permettre d'adsorber de nouveau des polluants.

Si les niveaux de minéraux adsorbés (sulfates, fluorures et métaux) sont trop importants, alors ces matériaux carbonés poreux peuvent être acheminés soit vers :
- une filière de désorption par voie chimique en vue de recycler le matériau carboné poreux CA ;
- soit une autre filière dans laquelle le charbon enrichi de ses minéraux peut être réemployé, par exemple comme structure et fertilisant de sol pour la croissance de plantes.

Grâce à l'invention, les sables issus du procédé de dépollution présentent, par rapport aux sables contaminés initiaux, les caractéristiques suivantes :
- une diminution du taux de fluorures de l'ordre de -29% en masse (passant de 21 à 15 ppm en masse) ;
- une réduction des BTEX de l'ordre de -45% en masse (passant de 11 à 6 ppm en masse).

## Revendications

1. Procédé de dépollution de sables contaminés (S1), notamment de sables de fonderie, comprenant des polluants minéraux et organiques, **caractérisé en ce qu'**il comprend :
- une étape de préparation (4) d'un substrat (S2) par adjonction aux sables contaminés (S1) d'un matériau carboné poreux (CA) choisi pour fixer des polluants minéraux, notamment des fluorures ;
- une étape de phytoremédiation (5) consistant à faire pousser sur le substrat (S2) des plantes sélectionnées pour dégrader au moins une partie des polluants organiques, l'étape de phytoremédiation (5) produisant des sables intermédiaires (S3) à partir du substrat (S2) ;
- une étape de séparation (6) du matériau carboné poreux (CA) des sables intermédiaires (S3), l'étape de séparation (6) produisant des sables traités (S4).

2. Procédé de dépollution selon la revendication précédente, **caractérisé en ce que** le matériau carboné poreux (CA) et les sables intermédiaires (S3) présentent une différence de granulométrie, l'étape de séparation (6) utilisant cette différence de granulométrie pour permettre la séparation du matériau carboné poreux (CA) des sables intermédiaires (S3).

3. Procédé de dépollution selon l'une quelconque des revendications précédentes, **caractérisé en ce que** le matériau carboné poreux (CA) est du charbon actif.

4. Procédé de dépollution selon l'une quelconque des revendications précédentes, **caractérisé en ce qu'**il comprend, avant l'étape de phytoremédiation (5), une étape d'ensemencement (2) bactérien par voie humide, puis une étape d'ensilage (3) anaérobie des sables contaminés (S1).

5. Procédé de dépollution selon l'une quelconque des revendications précédentes, **caractérisé en ce qu'**il comprend, après l'étape de séparation (6), une étape de compostage (7) aérobie des sables traités (S4).

6. Procédé de dépollution selon la revendication précédente, **caractérisé en ce que** lors de l'étape de compostage (7), les sables traités (S4) sont exposés à l'air sous forme d'au moins un monticule, un taux d'oxygène étant contrôlé à l'intérieur du ou des monticules, le ou les monticules étant retournés en cas de chute du taux d'oxygène.

7. Procédé de dépollution selon l'une quelconque des revendications précédentes, **caractérisé en ce que** l'étape de phytoremédiation (5) est réalisée sur un sol imperméabilisé, des eaux d'irrigation du substrat (S2) étant collectées dans un bassin de collecte puis réutilisée pour irriguer le substrat (S2).

8. Procédé de dépollution selon l'une quelconque des revendications précédentes, **caractérisé en ce que** les plantes, sélectionnées pour dégrader au moins une partie des polluants organiques, sont choisies parmi des espèces végétales endogènes à un lieu où est réalisé l'étape de phytoremédiation (5).

9. Procédé de dépollution selon l'une quelconque des revendications précédentes, **caractérisé en ce que** les plantes, sélectionnées pour dégrader au moins une partie des polluants organiques, sont choisies parmi des espèces végétales aptes à dégrader les phénols, les benzènes, les toluènes, les éthylbenzènes et les xylènes.

10. Procédé de dépollution selon la revendication précédente, **caractérisé en ce que** les plantes, sélectionnées pour dégrader au moins une partie des polluants organiques, appartiennent à la famille des Poacées.

## Patentansprüche

1. Verfahren zur Entseuchung verunreinigter Sande (S1), insbesondere von Gießereisanden, die mineralische und organische Schadstoffe umfassen, **dadurch gekennzeichnet, dass** es umfasst:
- einen Schritt zur Vorbereitung (4) eines Substrats (S2) durch Beimengen zu den verunreinigten Sanden (S1) eines porösen kohlenstoffhaltigen Materials (CA), das ausgewählt wird, um mineralische Schadstoffe, insbesondere Fluoride, zu absorbieren;
- einen Schritt zur Phytoremediation (5), der darin besteht, auf dem Substrat (S2) Pflanzen wachsen zu lassen, die ausgewählt werden, um mindestens einen Teil der organischen Schadstoffe abzubauen, wobei der Schritt zur Phytoremediation (5) Zwischensande (S3) aus dem Substrat (S2) erzeugt;
- einen Schritt zum Trennen (6) des porösen kohlenstoffhaltigen Materials (CA) von den Zwischensanden (S3), wobei der Schritt zum Trennen (6) behandelte Sande (S4) erzeugt.

2. Verfahren zur Entseuchung nach dem vorstehenden Anspruch, **dadurch gekennzeichnet, dass** das poröse kohlenstoffhaltige Material (CA) und die Zwischensande (S3) einen Korngrößenverteilungsunterschied aufweisen, wobei der Schritt zum Trennen (6) diesen Korngrößenverteilungsunterschied dazu verwendet, um die Trennung des porösen kohlenstoffhaltigen Materials (CA) von den Zwischensanden (S3) zu ermöglichen.

3. Verfahren zur Entseuchung nach einem der vorstehenden Ansprüche, **dadurch gekennzeichnet, dass** das poröse kohlenstoffhaltige Material (CA) Aktivkohle ist.

4. Verfahren zur Entseuchung nach einem der vorstehenden Ansprüche, **dadurch gekennzeichnet, dass** es vor dem Schritt zur Phytoremediation (5) einen Schritt zur bakteriellen Aussaat (2) durch Nassabscheidung, danach einen Schritt zur anaeroben Silage (3) der verunreinigten Sande (S1) umfasst.

5. Verfahren zur Entseuchung nach einem der vorstehenden Ansprüche, **dadurch gekennzeichnet, dass** es nach dem Schritt zum Trennen (6) einen Schritt zum aeroben Kompostieren (7) der behandelten Sande (S4) umfasst.

6. Verfahren zur Entseuchung nach dem vorstehenden Anspruch, **dadurch gekennzeichnet, dass** beim Schritt zum Kompostieren (7) die behandelten Sande (S4) in Form von mindestens einem kleinen Hügel Luft ausgesetzt werden, wobei ein Sauerstoffgehalt im Inneren des oder der kleinen Hügel kontrolliert wird, wobei der oder die kleine(n) Hügel im Falle eines Abfalls des Sauerstoffgehalts umgeschlagen wird (werden).

7. Verfahren zur Entseuchung nach einem der vorstehenden Ansprüche, **dadurch gekennzeichnet, dass** der Schritt zur Phytoremediation (5) auf einem undurchlässig gemachten Boden durchgeführt wird, wobei die Bewässerungswässer des Substrats (S2) in einem Sammelbecken gesammelt werden, und danach wieder zur Bewässerung des Substrats (S2) verwendet werden.

8. Verfahren zur Entseuchung nach einem der vorstehenden Ansprüche, **dadurch gekennzeichnet, dass** die Pflanzen, die ausgewählt werden, um mindestens einen Teil der organischen Schadstoffe abzubauen, aus endogenen Pflanzensorten an einem Ort gewählt werden, an dem der Schritt zur Phytoremediation (5) ausgeführt wird.

9. Verfahren zur Entseuchung nach einem der vorstehenden Ansprüche, **dadurch gekennzeichnet, dass** die Pflanzen, die ausgewählt werden, um mindestens einen Teil der organischen Schadstoffe abzubauen, aus Pflanzensorten gewählt werden, die imstande sind, die Phenole, die Benzole, die Toluene, die Ethylbenzole und die Xylene abzubauen.

10. Verfahren zur Entseuchung nach dem vorstehenden Anspruch, **dadurch gekennzeichnet, dass** die Pflanzen, die ausgewählt werden, um mindestens einen Teil der organischen Schadstoffe abzubauen, der Pflanzenfamilie der Süßgräser angehören.

## Claims

1. A method for depolluting contaminated sands (S1), in particular foundry sands, comprising mineral and organic pollutants, **characterised in that** it comprises:
- a step (4) of preparing a substrate (S2) by adding to the contaminated sands (S1) a porous carbonaceous material (CA) selected so as to fix mineral pollutants, in particular fluorides;
- a phytoremediation step (5) consisting in growing on the substrate (S2) plants selected so as to degrade at least part of the organic pollutants, the phytoremediation step (5) producing intermediate sands (S3) from the substrate (S2) ;
- a step (6) of separating the porous carbonaceous material (CA) from the intermediate sands (S3), the separation step (6) producing treated sands (S4).

2. The depollution method according to the preceding claim, **characterised in that** the porous carbonaceous material (CA) and the intermediate sands (S3) feature a grain-size difference, the separation step (6) using this grain-size difference to enable the separation of the porous carbonaceous material (CA) from the intermediate sands (S3) .

3. The depollution method according to any one of the preceding claims, **characterised in that** the porous carbonaceous material (CA) is activated carbon.

4. The depollution method according to any one of the preceding claims, **characterised in that** it comprises, before the phytoremediation step (5), a step of wet bacterial seeding (2), then a step of anaerobic ensiling (3) of the contaminated sands (S1).

5. The depollution method according to any one of the preceding claims, **characterised in that** it comprises, after the separation step (6), a step of aerobic composting (7) of the treated sands (S4).

6. The depollution method according to the preceding claim, **characterised in that** during the composting step (7), the treated sands (S4) are exposed to air in the form of at least one mound, an oxygen level being controlled inside the mound(s), with the mound(s) being flipped over in case of drop of the oxygen level.

7. The depollution method according to any one of the preceding claims, **characterised in that** the phytoremediation step (5) is carried out on an impermeable soil, irrigation waters from the substrate (S2) being collected in a collection basin and then reused to irrigate the substrate (S2).

8. The depollution method according to any one of the preceding claims, **characterised in that** the plants, selected so as to degrade at least part of the organic pollutants, are selected from endogenous plant species at a place where the phytoremediation step is carried out (5) .

9. The depollution method according to any one of the preceding claims, **characterised in that** the plants, selected so as to degrade at least part of the organic pollutants, are selected from plant species adapted to degrade phenols, benzenes, toluenes, ethylbenzenes and xylenes.

10. The depollution method according to the preceding claim, **characterised in that** the plants, selected so as to degrade at least part of the organic pollutants, belong to the Poaceae family.
